# EUROPEAN PATENT APPLICATION

(11) **EP 2 031 508 A1**
(43) Date of publication of application: **04.03.2009**
(21) Application number: 07253446.4
(22) Date of filing: 31.08.2007
(51) Int. Cl.: G06F 9/46, G06F 17/30, G06F 3/12

(54) **Network printing apparatus and method**

(71) Applicant: Ricoh Europe PLC, London W1U 4AG (GB); Ricoh Company, Ltd., Tokyo 143-8555 (JP)
(72) Inventor: Fukaya, Kazuyuki, 92143 Clamart Cedex (FR)
(74) Representative: White, Duncan Rohan

(57) **Abstract**

A document server (30) such as a multi-function printer comprises data storage (60) arranged to store one or more documents, and a processor (70) arranged to generate a local document information index containing information relating to said one or more documents, wherein said document server (30) is arranged to perform a plurality of roles including, a file server role in which the document server (30) is arranged to receive a local document information index from at least one further document server (10, 20) and to generate a master index comprising information relating to the location of a plurality of documents located amongst the plurality of document servers (10, 20, 30); and a client role in which the document server (10, 20, 30) supplies its local document index to a document server (30) currently designated as a file server.

## Description

### FIELD OF THE INVENTION

The present invention relates to data communication in a networked system and in particular to a system and method allowing follow-me functionality for data or documents in networks comprising a plurality of image forming apparatus.

### BACKGROUND OF THE INVENTION

In networked systems it is known to have "follow-me" functionality so that users can access data and documents at different nodes in the networked system and not only at their personal work station. In telecommunications the concept of follow me functionality frequently takes the form of a message forwarding facility so that calls or communications to a particular recipient can be accessed by the user even if they do not have access to their personal workstation to which the communication was originally sent.

Secured printing (also postponed printing) is a function which blocks print jobs sent to a printer until a successful authentication of the user at the printer terminal. It provides the user with total control over their own documents. Since the print job is sent from the server to the printer only at the moment of user's authentication, the user can at any time decide on which printer the document should be printed. This feature is called Follow-me printing.

Various follow-me printing systems are known, which normally use physical security devices, such as identification cards, in order to authenticate a user attempting access a document. Print jobs are sent from a client device to a print server to which the printing devices are connected in a well-known manner. The print server stores print jobs and releases them only when the user provides the necessary identification at the printer. The follow-me functionality offers flexibility to roam between printers and to ensure printing is not duplicated. Furthermore, if a printer is currently offline a user can simply walk to the next available printer without having to go back to their workstation and reprint.

A typical follow-me printing process includes a first step where a document is prepared by a user on a user device. When the document is ready for printing the user initiates the printing process and the document is sent to a print server. The authentication details are sent together with the data necessary to print the document. For example, the document may be authenticated by the user's password, but any other convenient means of authenticating the user may be used as is commonly known. Physical means are frequently used to authenticate the user, such as security cards or biometric devices. The print server stores the all the documents provided by the various user devices networked with that print server together with the authentication information. The print server is networked with a plurality of printer devices. Once the user is ready to pick up the print job, the user chooses one of the networked printer devices and performs an authentication process at that device, for example by entering a password. For example the user may request the printing of a particular print job at a particular printer, the user is then prompted to authenticate himself or herself to the printer. Typically, a separate authentication server deals with the authentication process and this requires communicating with the print server that holds the document for which the user is being authenticated. Once the user has been authenticated, the print server sends the document to the chosen printer device for printing.

Follow-me printing systems are known that operate for Windows™, LINX™, Unix™, Apple™, and AS400™-based environments. The known systems can integrate with an organisation's existing ID system (proximity, magnetic, smart cards or biometric identification such as fingerprint). Besides flexibility, follow me printing solutions also provide useful accounting functions and are generally thought to save time and money.

In one conventional system, a follow-me print system works on a Client-Server infrastructure with a central server or servers handling all print jobs in a similar way to a print server. There are three core components:
1. the Client, which is the user's workstation, for example
2. the file server or print server, which stores all print jobs uploaded from the client, and manages all communications and
3. the ID-Reader hardware, located on the printer allowing a variety of different recognition techniques to be sent to the server for authentication.

The user must first authenticate at the ID-reader using any of the supported identification technologies. Once authenticated the file server will release any pending print jobs.

Various companies provide follow-me printing solutions and each solution is dependent on the operating system and server of that system. In prior systems, if there is a problem with the print server then printing cannot be assured. It is desirable to have a system that is independent of a print server.

### SUMMARY OF THE INVENTION

The present invention provides a document server comprising, data storage arranged to store one or more documents; a processor arranged to generate a local document information index containing information relating to said one or more documents, wherein the apparatus is arranged to be connected to a network including at least one further document server and to supply information from the local document information index to said at least one further document server that is for the time being designated as a file server for keeping a master index including information from said local document information index.

The document server may be arranged to send a request for user document information to said document server that is for the time being designated as a file server for storing a master index including information from said local document information index.

The document server may be arranged to send a request for user document information to another document server that is for the time being designated as a file server for supplying user document information.

The document server may be arranged to receive user document information from said document server.

The document server may be arranged, in response to a document print request from a user, to identify the location of the requested document from the user document information and to send a request for the document to be provided from its present location.

The document server may be arranged to receive data constituting said master index from said document server designated as a file server for keeping a master index and to receive a request for user document information from another document server and to supply user document information from said data.

The invention also provides a document server comprising data storage arranged to store one or more documents; and a processor arranged to generate a local document information index containing information relating to said one or more documents, wherein the apparatus is arranged to be connected to a network including at least one further document server, to receive local document information from said at least one further document server and to combine the local document indexes to form a master index including information relating to the location of a plurality of documents located amongst the plurality of document servers.

The document server may be arranged to receive a request for user document information from another document server and to supply user document information from the master index.

The document server may be arranged to supply data from the master index to a document server that is for the time being designated as a file server for supplying user document information.

The local document information index may include information for identification of a user associated with each document.

Document information relating to said one or more documents may be provided with the, or each document.

The document server may include an image forming apparatus. In particular, the document server may comprise a multi-functional printer.

The local document information may include information for identification of a user associated with that document.

The local document information may include information identifying the document server at which a document is stored.

The invention further provides a method of providing secure document access in a system comprising a plurality of document servers, comprising receiving at a document server at least one document and storing the document, generating a local document information index including information relating to documents stored at the document server, and identifying one of said plurality of document servers as a file server and supplying the local document information index to the identified document server.

The local document information index may include information for identification of a user associated with each document.

The step of identifying the file server may include a step of polling each of said plurality of document servers to request whether any of said document servers is presently acting as the file server.

If no document server declares itself as the file server, then the first document server to declare itself as the file server may be identified by each of the document server as the file server.

The method may comprise receiving a request from a user for a document and issuing a request to the document server presently identified as a file server for information relating to the documents in the system associated with the user and supplying the document to the user based on the information received from the file server.

The method may comprise identifying a further document server as a backup file server, receiving a request from a user for a document, issuing a request to the backup file server for information relating to documents in the system associated with the user and supplying the document to the user based on the information received from the file server.

The method may further comprise receiving at a document server presently identified as a file server a local document information index from at least one further document server and generating a master index including information relating to the location of a plurality of documents located amongst the plurality of document servers.

The method may further comprise receiving at the file server a request from one of said plurality of document servers for information relating to documents in the system associated with a user and supplying information from the master index.

The method may further comprise identifying a further one of the document servers as a backup file server and supplying the contents of the master index to said backup server.

The method may comprise receiving at the backup file server a request from one of said plurality of document servers for information relating to documents in the system associated with a user and supplying information from the master index.

The method may include the step of receiving a request for a document at any one of said document servers and a step of authenticating the user.

In another aspect the invention provides a document server comprising data storage arranged to store one or more documents, and a processor arranged to generate a local document information index containing information relating to said one or more documents, wherein said document server is arranged to perform a plurality of roles including, a file server role in which the document server is arranged to receive a local document information index from at least one further document server and to generate a master index comprising information relating to the location of a plurality of documents located amongst the plurality of document servers; and a client role in which the document server supplies its local document index to a document server currently designated as a file server.

In a further aspect the invention provides a file server arranged to communicate with at least one image forming apparatus, the file server being arranged to receive and store a plurality of document files from one or more user devices, and to receive user input data from an image forming apparatus, wherein the file server processes the user input data and sends one or more stored documents to the image forming apparatus based on the processing of the user input data.

The processing performed on the user input data may be an authentication or validation processing.

A system comprising the file server mentioned immediately above may include at least one image forming apparatus in communication with the file server.

The image forming apparatus may be arranged to send user input data to the file server, and the file server is arranged to send information relating to documents stored on the file server, such that a document requested by a user is not processed by the document server unless authenticated by the file server.

The image forming apparatus may include a user interface including means for displaying an output from the file server.

The user interface may be arranged to allow user input at the image forming apparatus and to send the user input data to the file server.

The user interface may comprise a browser for direct communication with the file server.

### BRIEF DESCRIPTION OF THE DRAWINGS

The invention will now be described in more detail and by way of example only, with reference to the accompanying drawings in which:
Figure 1 is schematic of a part of a network in which follow-me printing according to the present invention can be implemented.
Figure 2 is a flow chart of the processes formed by the image forming apparatus of the present invention when performing a client role.
Figure 3 is a flow chart of the processes formed by the image forming apparatus of the present invention when performing a file server role.
Figure 4 is a flow chart of the processes formed by the image forming apparatus of the present invention when performing a backup server role.
Figure 5 is a schematic of a part of a network for implementing an alternative follow-me print function technique.

### DESCRIPTION OF THE EMBODIMENTS

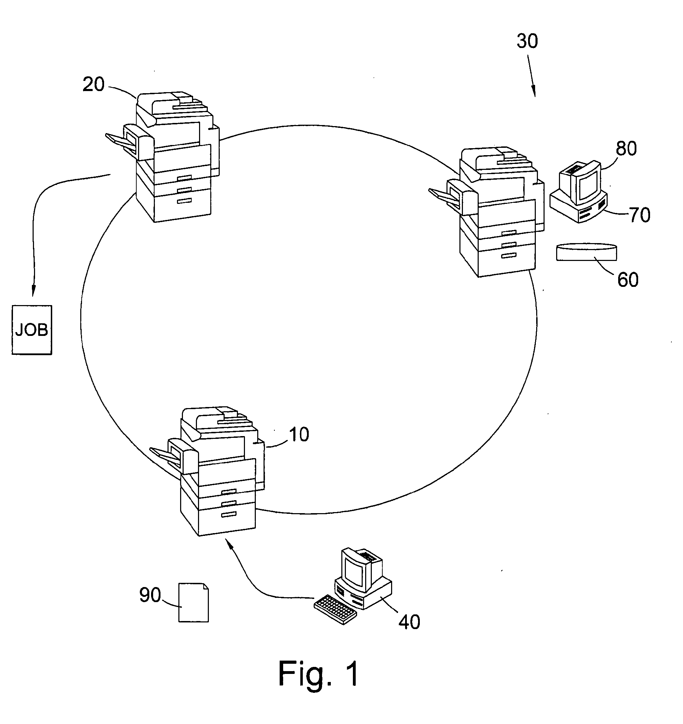

Figure 1 shows a part of a system according to an embodiment, including a plurality of image forming apparatus 10, 20 and 30, a user device 40 and a print job 50. A printer is an example of a document server, which could also include copiers and multifunctional devices that are now common in most offices; such multifunctional devices commonly provide printing, copying and scanning functions.

Figure 1 shows a single user device 40, such as a work station, but the network would typically include a plurality of user devices either on a local area network or connectable to the network via a large area network, such as over the internet. For the purposes of the present description it is only necessary to refer to a single user device 40. The user device may be a workstation, including a desk top computer, a Lap top, or a mobile computing device. Any device capable of preparing an electronic document for processing by the devices 10, 20, and 30, could perform the function of the user device 40.

The network of figure 1 could be in an office block on one or more floors and even spread over different buildings over any area. Typically, the user device 40 will be part of a domain including a number of user devices sharing a plurality of document servers 10, 20, 30. Typically there would be more user devices 40 than document servers 10, 20, 30. The term domain refers to a group of nodes in a network that are related; in the present case, the nodes all form part of a follow-me print environment. A domain may be specified by a domain name. In a concrete implementation, this "Domain" can be a Windows Active Directory domain. Alternatively, a data field associated with each node may define which domain the node belongs to. For a document server to act as part of the follow-me print network solution it is required to have this data as a part of its configuration data. If the Domain is a Windows Active Directory domain, then it will be required to specify the domain controller, which defines the real domain name. If the Domain is to refer to a specific field for the Follow-Me print solution, then in each document server, there should be a parameter to be configured, by default by the manufacture like RICOH, or by the end-users. A domain could include all of the nodes in a network.

Each document server 10, 20, 30 includes local storage 60 and a central processing unit 70, which are normally integral with the document server apparatus. The document servers will commonly have displays 80 and may provide a browser function.

Figure 1 shows a "sever-less" follow-me printing system in accordance with an embodiment of the invention. The technique is called server-less because there is no physically separate server performing the functions of the print server of the prior art. Instead the server functions are distributed between the document servers 10, 20, 30 as will be described in more detail below.

In the present invention, therefore, when a document file 90 is sent for printing by a user, the document file 90 is not sent to a dedicated print server or file server, but instead, the document is sent to one of a plurality of document server 10, 20, 30 in a domain on the network. Typically, the document will be sent to a particular designated local document sever 10 for that user device or user. Which of the plurality of document servers is chosen is not important to the present invention. The chosen document server could be chosen at random, but is more likely to be a dedicated default printer for that user or user device; for instance, the document server 10 that is physically closest to the user device 40. Of course the user device need not be a located at a workstation but may be a mobile device and a default document server could be selected in any convenient way. Furthermore, the user might select a particular one of the document servers 10, 20, 30 to send a particular document to.

Instead of a dedicated print server, therefore, the documents are stored locally at the plurality of document servers. Each document server will store not only the print documents sent to it, but will also create a local index of those documents. The stored documents can be identified by the document server name and an ID unique to the document stored inside of the document server. Since the document server itself has a unique ID such as IP Address inside the domain, any documents can have a unique identifier in the domain. Because the document servers are in the same domain and are all in communication via the network, the local indexes created by each document server can be shared so that a full document index for the domain (the domain or master index) is available to each document server. In an aspect of the present invention, each of the document servers keeps an index of the documents stored locally in local storage 60 and the local indexes are provided to one of the document servers - presently identified as the follow me print server (FMPS), which keeps a master index of the documents on the network or in that particular domain.

The FMPS manages all information for the documents available in the Domain or group. As an example of the implementation of FMPS, the FMPS should be able to hold all information for any documents in its domain by having the index information for each document. The index information should contain data such as to where the document is stored, the name of the document, and the owner of the document (User ID). Example: User ID, Document URL: document server name/document name.

When a user tries to access the document file 90 at one of the document servers, e.g. document server 20, the document server 20 is able to access the document file 90, which is stored on document server 10, by consulting the domain index held by the FMPS to identify the location of the document. The document file 90 can be retrieved from the document server 10 and processed at the document server 20. Security can be provided using any prior art authentication technique. Some form of user identification process is necessary to identify the users. Typically, after authentication, the document server will have the user's id, and can retrieve all documents related to that user and display the information relating to those documents at the document server 20 where the user operates document retrieval. A particular authentication technique useful in the present invention is described in more detail below.

A particular implementation of the server-less follow-me printing technique of the present invention will now be described. In the present embodiment one of the document servers is designated as a follow-me print server (FMPS) for a specified group of document servers. The group of servers is termed a domain which consists of the network or part of the network serviced by the specified group of document servers. The FMPS is not a print server in the usual sense because it does not store all of the documents for each of a plurality of document servers. Instead, as described above, each document server 10, 20, 30 may store a plurality of documents submitted by certain specified user devices 40. In this respect the FMPS operates in an identical manner, in that it receives document files 90 from user devices 40 and stores them locally in local storage 60 and generates local index data relating to the locally stored documents. In the present embodiment each of the document servers 10, 20, 30 in the domain communicate their locally generated index information to the currently designated FMPS, which generates the domain index. The FMPS holds a copy of the domain index, which is an index of all documents stored in the domain.

Generally, when a user logs onto a document server 10, 20, 30, and is authenticated, the document server sends a request to the currently identified FMPS for all information in the domain relating to that user. That information is stored in the domain index held by the FMPS. In the present embodiment, a user at a particular document server 10, 20, 30, will request a particular document file 90, the document server 10, 20, 30, will make a document request to the FMPS which will provide the document information relating to that user from the domain index. The document will then be supplied to the document server that made the request either directly from the document server 10, 20, 30, that stores the particular document file 90, or via the FMPS. It will be evident to the skilled person that the system could be arranged such that if the document server 10, 20, 30, having the document file 90 is requested to send the document to the requesting document server 10, 20, 30, then the instructions to send the document can come either from the requesting document server 10, 20, 30, or from the FMPS. Clearly the document could be located at the FMPS or even at the document server 10, 20, 30 where the initial user request was made.

In an embodiment, the document includes the authentication information. The document server 10, 20, 30 at which the user has made the request authenticates the user on the basis of user input and the authentication information contained in the document file 90. In a particular embodiment the user is not authenticated using information that is included in the document itself. Instead, users are authenticated by any known authentication method, and he/she is related to the document by the user identification information such as a User ID. Thus, the technique of the present invention can be fully integrated with a user's existing authentication system, if required.

Whilst, it can be envisaged that a specific machine always takes the role of the FMPS, the system can be made more flexible and robust if the FMPS is selected dynamically depending on the circumstances. In an embodiment the document servers 10, 20, 30 are programmed with the rules for determining the FMPS. When a document sever 10, 20, 30 is switched to an operational mode from a non-operational mode, a process is initiated to identify the FMPS for the domain of the document server 10, 20, 30. Thus the document server will poll the other document servers to determine whether any of them is presently designated as the FMPS. Once the FMPS is identified the document server 10, 20, 30 will assume a client role and will maintain a local index of documents and update the FMPS with any new document index information. If no FMPS is located, because there are no other operational document servers in the domain, then the current document server will assume the FMPS role, preferably after a short time delay to ensure that two document servers 10, 20, 30 do not both declare that they are the FMPS for that domain. The short time delay can be implemented by using a random time delay of, for example, in the range 10msec to 5000msec. Alternatively, each document server may be assigned a predetermined time delay, which may be different for each document server. Thus the first document server 10, 20, 30 to start up will become the FMPS. The precise mechanics of the polling are not important and can be implemented by the skilled person without any difficulty.

In the present embodiment, the first document server 10, 20, 30 to start up becomes the FMPS and the remaining document servers 10, 20, 30 assume a client role. In this case, when the current FMPS becomes unavailable, for example, because it is turned off or becomes in-operational for some other reason, when a client attempts to update the domain index with local document index information there will be no response; in that case the document server that first attempts to contact the currently identified FMPS will assume the FMPS role and declare its new status to the remaining document servers 10, 20, 30 in the domain. The new FMPS will then request or be supplied with the local document index information from the remaining document servers 10, 20, 30 to recover the domain index.

In the above embodiment there are many variations that could be made for selecting the FMPS and for changing the identity of the FMPS under circumstances where the current FMPS becomes in-operational. A more specific protocol for assigning roles will now be described. In the present embodiment, the role of the FMPS is split between two of the document servers 10, 20, 30. Besides the client role taken by all document servers, in the present embodiment there are two further roles, the "master server" role and the "backup sever" role. In this embodiment, the first document server 10, 20, 30 in the domain to become operational assumes the master server role, and the second document server 10, 20, 30 to become operational assumes the backup server role.

In the present embodiment the master server is responsible for maintaining the domain index, thus the 'client' document servers provide all index information to the master sever. The backup server is responsible for responding to the client's requests for information. The master server, therefore, communicates all local index information to the backup sever so that the backup sever has a second copy of the domain index. It is noted that the existence of a backup sever would be useful in the previously described embodiment in which case the back up role would merely be to keep the backup copy of the domain index and the FMPS would still handle all of the requests from the client document servers.

Whenever a document server 10, 20, 30 receives a new document to be stored locally, it creates the index information for its local document index and supplies the new index information to the FMPS (master server) so that the master index can be updated. The Backup server, which holds the copy of the Domain Index, is consulted when a user is authenticated. The Backup server searches the Domain Index, which in this embodiment is stored locally at the backup sever, and identifies one or more document files 90 related to the user who has been authenticated on document server 20 that has issued the request for information.

In the present embodiment the master server may be identified in an identical fashion as described above in the previous embodiment. Each time a document server becomes operational in the domain it determines whether there is a declared master server and backup server. If there is no declared server (master or backup) then the present document server 10, 20, 30 waits for a short time period and then assumes the master server role. The time period is typically a random period, for example, in the range 10msec to 5000msec.

If both the master server and backup server exist then the document server assumes only the client role. As previously stated, all document servers in the domain provide the client role.

Where the master server only is found, then the present document server will wait a for a short time period (typically a random period, for example, in the range 10msec to 5000msec) and declare itself - as the second device to join the domain - as the backup server.

Once the master server and backup server roles have been filled all new document servers 10, 20, 30 to the present domain assume only the client role.

If the document server 10, 20, 30 acting as the present master server is purposefully switched to a non-operational mode in relation to the network, e.g. it is turned off manually, the master server before powering down or disconnecting from the domain notifies the present backup server and the present document server 10, 20, 30 acting as the backup server assumes the master server role. A new backup server is determined as described below.

There is a possibility that the document server 10, 20, 30 that is presently the master server could become non-operational in the domain unintentionally, for example, because of a loss of power or loss of network connection. In order that there is no loss in system integrity, the document server that is currently designated the backup sever periodically polls the presently designated master server, if the master server does not respond to the periodic inquiry then the backup server assumes the master server role and informs the remaining document servers 10, 20, 30 that it is now the master server. The document servers in the client role will now provide updated index information to the newly designated master server.

There is now no backup server and under these circumstances the master sever issues a notification to the remaining document servers 10, 20, 30 that there is no backup server, each document server that receives the notification waits a short time period (typically a random period, for example, in the range 10msec to 5000msec) and, if no other document server declares itself the new backup server, then the document server declares itself the new backup server by indicating to all the document servers that it is now the backup server. In this embodiment the document servers in the client role now send information requests to the new backup server - and index information to the present master server.

Similarly when the document server that is operating as the backup server is intentionally disconnected from the domain, for example, because it is manually powered down, the backup server issues a notification that it is shutting down, or alternatively informs the master server, which issues the notification to the remaining document servers in the domain. In either case the procedure is as explained directly above, the client servers each waiting a random, short amount of time to determine which client, document server will now assume the backup server role.

If the backup server is unintentionally removed from the domain and there is no opportunity to issue the backup server shutdown notification, then in this case, because the master server is periodically checking whether the backup server is present in the domain, the master server will not receive a response to the periodic inquiry and will issue the backup server shutdown notification to the remaining document servers 10, 20, 30, which are in the client roles.

From the point of view of a document server 10, 20, 30 in a client role it is possible that the client could be the first document server to determine that there is no master server or backup server. This may occur when one or more of the master and backup servers is disconnected or becomes in-operational in the domain. A document server 10, 20, 30 will check whether the backup server is present in the domain when it first becomes operable in the domain. The same check is made when a user logs on at a document server 10, 20, 30 and the document server requests from the backup server the user information. If the backup server is not present the client informs the master server by issuing a backup server not present notification. That notification prompts the master server to issue the notification to the clients that the backup server is not present, thereby instigating the above procedure for determining a new backup server. Alternatively under this circumstance the client might simply inform the master server that it is the new backup server.

When a document file 90 is sent from a user device 40 to a document server 10, 20, 30, the document server behaves as a client and attempts to register the new index data with the master server. If there is no master server in the system then the attempt fails and in the present embodiment the client informs the backup server and the backup server assumes the role of the master server and issues the backup server not present notification to the remaining document servers 10, 20, 30. If the backup server is not present either, which will be determined on issuing the master server not present notification to the presently identified backup server, then the client will assume, after a waiting a short time period (typically a random period, for example, in the range 10msec to 5000msec), the master server role and issue a backup server nor present notification to the remaining document servers 10, 20, 30 in order to designate a new backup server.

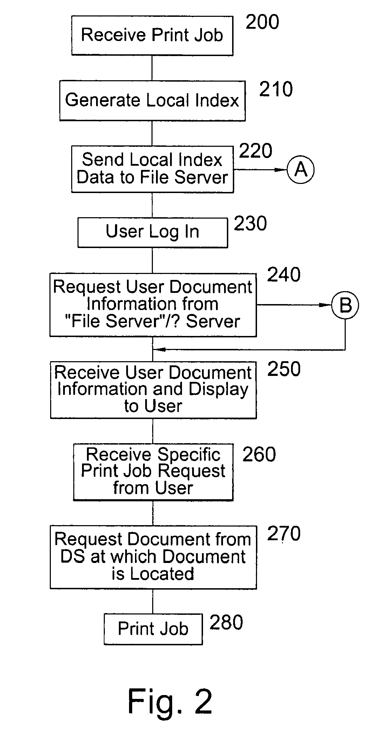

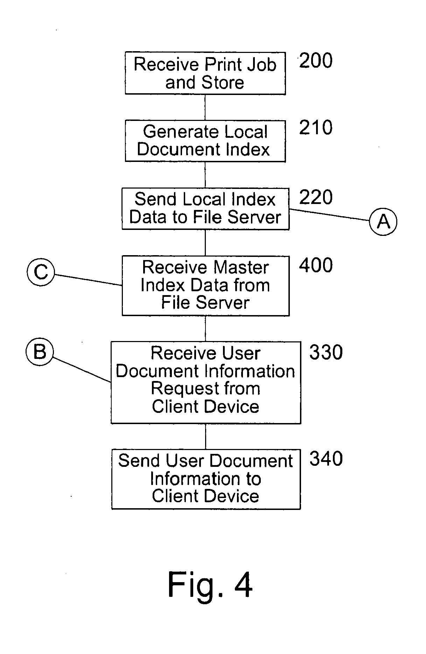

As explained above, in an embodiment the document servers in a domain of a network perform three basic roles depending on the circumstances. These roles are further explained with reference to figures 2 to 4 and discussed in relation to the network shown in Figure 1. Firstly, the basic role is the client server role illustrated in figure 2. As described above a document server 10 receives a print job 90 in step 200 and this is stored together with any other documents stored at that document server (DS). There may be many documents stored at the document server 10 from any number of users.

In step 210 the document server generates a local index, or adds the new document information to an extant local index. The index holding information relating to the documents held at that document server 10. The index associates each document with a user, in the present embodiment the documents include the data required to identify the user.

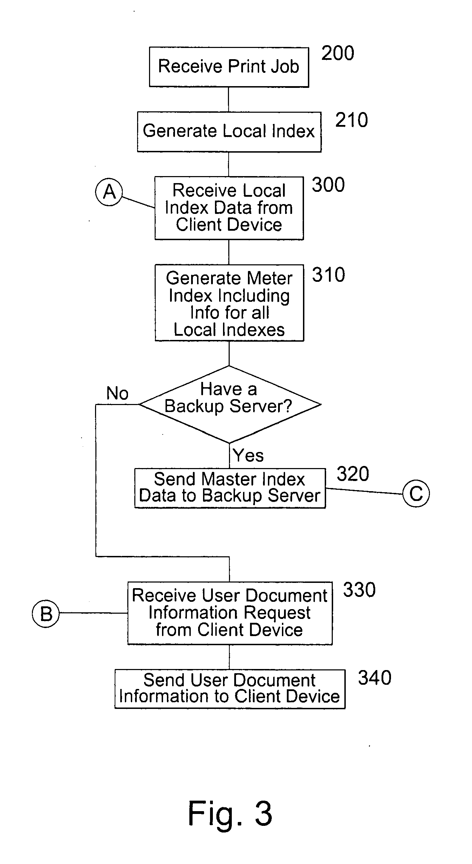

In step 220 the document server 10 sends data from the local index to another document server that is for the time being identified as the FMPS. The mechanism for identifying the FMPS is discussed below. If the document server 10 is the present FMPS for the domain then step 220 is a step of adding the new local index data to a master index held at the document server 10. Thus the steps 200 to 220 are performed by all of the document servers in the Domain. In the present case, document server 30 is identified as the FMPS and the document servers 10 and 20 send the local index data to document server 30. The FMPS role is discussed in connection with Figure 3.

In step 230 a user logs in at a document server 10, 20, 30 using any suitable security system, conveniently a PIN or password system using an entry pad (not shown) of the document server 10, 20, 30. Once authorisation is complete, the document server 10, 20, 30 sends a request for user document information to the presently identified FMPS (step 240) and receives the user document information in step 250. The user document information is typically displayed to the user, for example a list of the documents sent to the network by the user.

The user specifies a particular document to be printed in step 260, the document server 10, 20, 30, receives the request and identifies from the user document information supplied by the FMPS the document server 10, 20, 30 that holds that document. A request is sent to the identified document server 10, 20, 30 in step 270. Finally the requested document is printed in step 280 by the document server 10, 20, 30 that has requested the document.

Turning now to Figure 3 illustrating the functions performed in the FMPS or file server role. Steps 200 and 210 are the same as for figure 2 in relation to the client role. In the present embodiment the FMPS is a document server that for the time being is identified as the FMPS and as such accepts documents and creates local index information for any documents received. In step 300 the FMPS receives local index data from one or more document servers presently performing a client role. The received local index data is added to any such data generated by the FMPS itself to form the master index of all the documents presently held on document servers in the domain of the network (step 310).

As explained above, in one embodiment the FMPS is responsible for both maintaining the master index of document information and also for supplying user document information on request from a document server in the domain. In another embodiment the roles are split between the file server role and the backup server role. If there is a backup server then the FMPs sends the master index data to the presently identified backup server (step 320) if the network is operating with a single FMPS then the FMPS performs steps 330 and 340.

In step 330 the FMPS receives from a document server at which a user has logged on a request for user document information. That document server could be the FMPS itself.

In step 340 the FMPS send the user document information for the identified user to the requesting document server.

In the embodiment including the backup server role, the document server presently identified as the backup server performs steps 200 to 220 identically to the client role discussed above in connection with figure 2. The backup server also performs step 400, which is a step of receiving the master index data from the FMPS that was sent in step 320 of Figure 3. In this embodiment it is the backup server that performs steps 330 and 340 discussed above.

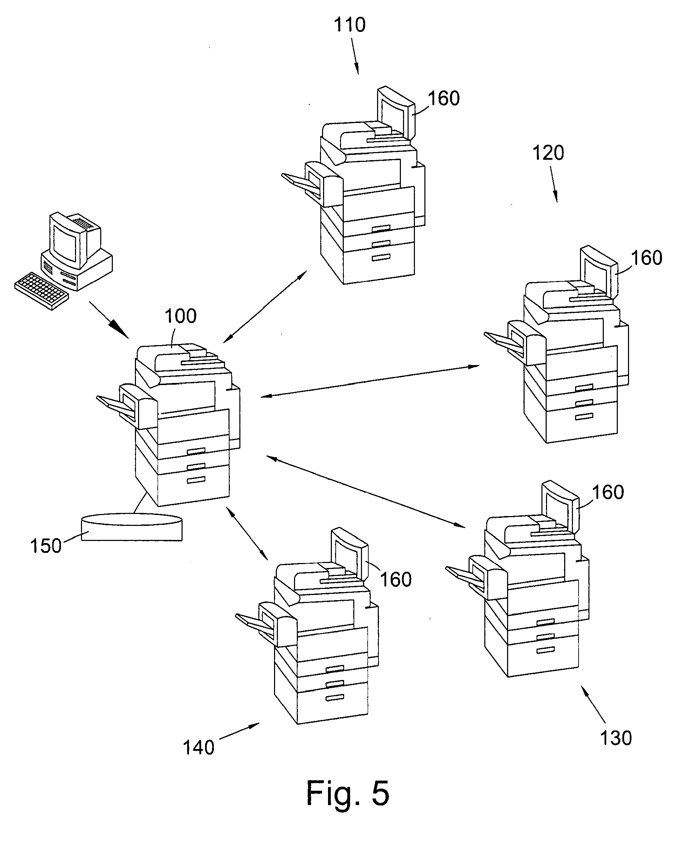

Turning now to figure 5 a plurality of image forming apparatus or MFP devices 100, 110, 120, 130, and 140 are shown. One of these devices 100 is arranged to form the function of a file server for the network of devices 100, 110, 120, 130, and 140. Figure 2 shows a single user device 40, such as a work station, but the network would typically include a plurality of user devices either on a local area network or connectable to the network via a large area network, such as over the internet. For the purposes of the present description it is only necessary to refer to a single user device 40. The user device may be a workstation, including a desk top computer, a Lap top, or a mobile computing device. Any device capable of preparing an electronic document for processing by the devices 100, 110, 120, 130, and 140, could perform the function of the user device 40.

In the embodiment of Figure 5, there is no separate file server and the device 100 acts as the file server according to conventional follow-me printing. The device 100 could, for present purposes, be a suitably programmed, conventional, file-sever and does not need to include a document server. All documents from the user device 40 and any other user device on the network are sent to the device 100 as the file server. In the present embodiment all documents are provided to the device 100 acting as the file server and stored in local memory storage 150.

In conventional follow-me printing techniques, as previously mentioned, the systems are all proprietary systems, the client devices corresponding to the devices 110, 120, 130 and 140 act as true clients and include local processing in order to implement the necessary client tasks including authentication of the user and communication with the file-server in order to retrieve the authenticated user's documents on request.

In the present embodiment the devices 110, 120, 130 and 140 and provided with monitors having a browser capability such that the user can access the file server device directly and the processing is carried out on the file server 100. In figure 5, this is depicted by the MFP browser 160 possessed by each of the devices 110, 120, 130, 140 and optionally the device 100 if this is acting as part of the network of image forming apparatus or document servers.

In conventional follow-me printing, the client device would include processing means and possibly additional hardware in order to receive identification information from the user or from identification hardware such as an ID-card, which may include an RF-ID device. The processing means would include the necessary hardware and software for the printer or MFP to function as a true client device in a client - server architecture, with the client having control of various communication processes.

In the present embodiment the devices 110, 120, 130, and 140 communicate with the server via the MFP browser, which allows the bulk of the processing to be performed on the server allowing cheaper printing devices requiring less hardware and software to support the follow-me print and other functions of the system.

In the technique of the present embodiment a user at user device 40 issues a print command and a print job is sent to the file sever 100, where it is stored in a print queue until requested by the user. The user may request the document to be printed at any one of the print devices 110, 120, 130, 140, or even 100 if it is provided with an image forming apparatus such as a printer.

At the devices 110, 120, 130, and 140, the user identifies himself through MFP browser 160, which is in communication directly with the file server 100. Thus the authentication procedure is controlled on the server 100 and not on the satellite device 110, 120, 130, or 140. Once authentication is complete the fileserver 100 can either send the document directly to print device 110, 120, 130, 140 at which the user has accessed the MFP browser 160 in order to provide authentication or, alternatively, the server 100 can provide further information or functions to the user through the MFP browser 160. Whilst the user is located at a particular satellite device 110, 120, 130, 140, all the processing is occurring on the server 100 and additional hardware and software are not required on the device 110, 120, 130, 140.

In the present embodiment, therefore, besides the authentication function, other functions can be provided through the MFP browser without the need to implement software or hardware additions to each of the printing devices.

Embodiments of the invention have been described and modifications will suggest themselves to those skilled in the art without departing from the scope of the invention as defined by the appended claims. Particular methods of synchronising the various nodes of the network or domain have been described and that are particularly advantageous. Other possibilities for synchronisation of the document servers are possible. Furthermore, the communication of information between the document servers has been discussed generally because the invention is not limited by the particular arrangement of the network, especially in terms of operating systems or languages. Furthermore, the invention can be implemented on different combinations of hardware that can be easily selected by the skilled person.

## Claims

1. A document server comprising:
data storage arranged to store one or more documents;
a processor arranged to generate a local document information index containing information relating to said one or more documents, wherein the apparatus is arranged to be connected to a network including at least one further document server and to supply information from the local document information index to said at least one further document server that is for the time being designated as a file server for keeping a master index including information from said local document information index.

2. A document server as claimed in claim 1, wherein the document server is arranged to send a request for user document information to said document server that is for the time being designated as a file server for storing a master index including information from said local document information index.

3. A document server as claimed in claim 1, wherein the document server is arranged to send a request for user document information to another document server that is for the time being designated as a file server for supplying user document information.

4. A document server as claimed in claim 2 or 3, wherein the document server is arranged to receive user document information from said document server.

5. A document server as claimed in claim 4, wherein the document server is arranged, in response to a document print request from a user, to identify the location of the requested document from the user document information and to send a request for the document to be provided from its present location.

6. A document server as claimed in any one preceding claim, wherein the document server arranged to receive data constituting said master index from said document server designated as a file server for keeping a master index and to receive a request for user document information from another document server and to supply user document information from said data.

7. A document server comprising:
data storage arranged to store one or more documents;
a processor arranged to generate a local document information index containing information relating to said one or more documents, wherein the apparatus is arranged to be connected to a network including at least one further document server, to receive local document information from said at least one further document server and to combine the local document indexes to form a master index including information relating to the location of a plurality of documents located amongst the plurality of document servers.

8. A document server as claimed in claim 7, wherein the document server is arranged to receive a request for user document information from another document server and to supply user document information from the master index.

9. A document server as claimed in claim 7, wherein the document server is arranged to supply data from the master index to a document server that is for the time being designated as a file server for supplying user document information.

10. A document server as claimed in any one preceding claim, wherein said local document information index includes information for identification of a user associated with each document.

11. A document server as claimed in any one preceding claim, wherein said document information relating to said one or more documents is provided with the, or each document.

12. A document server as claimed in any one preceding claim, wherein the document server includes an image forming apparatus.

13. A document server as claimed in any one preceding claim, wherein the document server comprises a multi-functional printer.

14. A document server as claimed in any one preceding claim, wherein said local document information includes information for identification of a user associated with that document.

15. A document server as claimed in any one preceding claim, wherein said local document information includes information identifying the document server at which a document is stored.

16. A method of providing secure document access in a system comprising a plurality of document servers, comprising:
receiving at a document server at least one document and storing the document,
generating a local document information index including information relating to documents stored at the document server, and
identifying one of said plurality of document servers as a file server and supplying the local document information index to the identified document server.

17. A method as claimed in claim 16, wherein the local document information index includes information for identification of a user associated with each document.

18. A method as claimed in claim 16 or 17, wherein the step of identifying the file server includes a step of polling each of said plurality of document servers to request whether any of said document servers is presently acting as the file server.

19. A method as claimed in claim 18, wherein if no document server declares itself as the file server, then the first document server to declare itself as the file server is identified by each of the document server as the file server.

20. A method as claimed in any one of claims 16 to 19, comprising receiving a request from a user for a document and issuing a request to the document server presently identified as a file server for information relating to the documents in the system associated with the user and supplying the document to the user based on the information received from the file server.

21. A method as claimed in any one of claims 16 to 19, comprising identifying a further document server as a backup file server, receiving a request from a user for a document, issuing a request to the backup file server for information relating to documents in the system associated with the user and supplying the document to the user based on the information received from the file server.

22. A method as claimed in any one of claims 16 to 21, further comprising receiving at a document server presently identified as a file server a local document information index from at least one further document server and generating a master index including information relating to the location of a plurality of documents located amongst the plurality of document servers.

23. A method as claimed in claim 22, further comprising receiving at the file server a request from one of said plurality of document servers for information relating to documents in the system associated with a user and supplying information from the master index.

24. A method as claimed in claim 22, further comprising identifying a further one of the document servers as a backup file server and supplying the contents of the master index to said backup server.

25. A method as claimed in claim 24, comprising receiving at the backup file server a request from one of said plurality of document servers for information relating to documents in the system associated with a user and supplying information from the master index.

26. A method as claimed in any one of claims 16 to 25, including the step of receiving a request for a document at any one of said document servers and a step of authenticating the user.

27. A document server comprising data storage arranged to store one or more documents, and a processor arranged to generate a local document information index containing information relating to said one or more documents, wherein said document server is arranged to perform a plurality of roles including, a file server role in which the document server is arranged to receive a local document information index from at least one further document server and to generate a master index comprising information relating to the location of a plurality of documents located amongst the plurality of document servers; and a client role in which the document server supplies its local document index to a document server currently designated as a file server.

28. A file server arranged to communicate with at least one image forming apparatus, the file server being arranged to receive and store a plurality of document files from one or more user devices, and to receive user input data from an image forming apparatus, wherein the file server processes the user input data and sends one or more stored documents to the image forming apparatus based on the processing of the user input data.

29. A file server as claimed in claim 28, wherein the processing performed on the user input data is an authentication or validation processing.

30. A system comprising the file server as claimed in claim 28 or 29 and including at least one image forming apparatus in communication with the file server.

31. A system as claimed in claim 30, wherein the image forming apparatus is arranged to send user input data to the file server, and the file server is arranged to send information relating to documents stored on the file server, such that a document requested by a user is not processed by the document server unless authenticated by the file server.

32. A system as claimed in claim 31, wherein the image forming apparatus includes a user interface including means for displaying an output from the file server.

33. A system as claimed in claim 31 or 32, wherein the user interface is arranged to allow user input at the image forming apparatus and to send the user input data to the file server.

34. A system as claimed in claim 32 or 33, wherein said user interface comprises a browser for direct communication with the file server.

## Amended claims

### Amended claims in accordance with Rule 137(2) EPC.

**1.** An image forming apparatus document server (10) comprising:
data storage (60) arranged to store one or more documents to be printed;
a processor arranged to generate a local document information index containing information relating to said one or more documents, wherein the image forming apparatus document server (10) is arranged to be connected to a network including at least one further image forming apparatus document server (20, 30) and to supply information from the local document information index to said at least one further image forming apparatus document server (20, 30) that is for the time being designated as a file server for keeping a master index including information from said local document information index.

**2.** An image forming apparatus document server (10) as claimed in claim 1, wherein the image forming apparatus document server (10) is arranged to send a request for user document information to said image forming apparatus document server (20, 30) that is for the time being designated as a file server for storing a master index including information from said local document information index.

**3.** An image forming apparatus document server (10) as claimed in claim 1, wherein the image forming apparatus document server (10) is arranged to send a request for user document information to another image forming apparatus document server (20, 30) that is for the time being designated as a file server for supplying user document information.

**4.** An image forming apparatus document server (10) as claimed in claim 2 or 3, wherein the image forming apparatus document server (10) is arranged to receive user document information from said image forming apparatus document server (20, 30).

**5.** An image forming apparatus document server (10) as claimed in claim 4, wherein the image forming apparatus document server (10) is arranged, in response to a document print request from a user, to identify the location of the requested document from the user document information and to send a request for the document to be provided from its present location.

**6.** An image forming apparatus document server (10) as claimed in any one preceding claim, wherein the image forming apparatus document server (10) is arranged to receive data constituting said master index from said image forming apparatus document server (20, 30) designated as a file server for keeping a master index and to receive a request for user document information from another image forming apparatus document server (20, 30) and to supply user document information from said data.

**7.** An image forming apparatus document server (10) comprising:
data storage (60) arranged to store one or more documents to be printed;
a processor arranged to generate a local document information index containing information relating to said one or more documents, wherein the image forming apparatus document server is arranged to be connected to a network including at least one further image forming apparatus document server (20, 30), to receive local document information from said at least one further image forming apparatus document server (20, 30) and to combine the local document indexes to form a master index including information relating to the location of a plurality of documents located amongst the plurality of image forming apparatus document servers (10, 20, 30).

**8.** An image forming apparatus document server (10) as claimed in claim 7, wherein the image forming apparatus document server (10) is arranged to receive a request for user document information from another image forming apparatus document server (20, 30) and to supply user document information from the master index.

**9.** An image forming apparatus document server (10) as claimed in claim 7, wherein the image forming apparatus document server (10) is arranged to supply data from the master index to an image forming apparatus document server (20, 30) that is for the time being designated as a file server for supplying user document information.

**10.** An image forming apparatus document server (10) as claimed in any one preceding claim, wherein said local document information index includes information for identification of a user associated with each document.

**11.** An image forming apparatus document server (10) as claimed in any one preceding claim, wherein said information relating to said one or more documents is provided with the, or each document

**12.** An image forming apparatus document server (10) as claimed in any one preceding claim, wherein the image forming apparatus document server (10) includes an image forming apparatus (10).

**13.** An image forming apparatus document server (10) as claimed in any one preceding claim, wherein the image forming apparatus document server (10) comprises a multi-functional printer (10).

**14.** An image forming apparatus document server (10) as claimed in any one preceding claim, wherein said local document information includes information for identification of a user associated with that document.

**15.** An image forming apparatus document server (10) as claimed in any one preceding claim, wherein said local document information includes information identifying the image forming apparatus document server (10) at which a document is stored.

**16.** A method of providing secure document access in a system comprising a plurality of image forming apparatus document servers (10, 20, 30), comprising:
receiving (200) at an image forming apparatus document server (10, 20, 30) at least one document to be printed and storing the document,
generating a local document information index (210) including information relating to documents stored at the image forming apparatus document server (10, 20, 30), and
identifying one of said plurality of image forming apparatus document servers (10, 20, 30) as a file server and supplying the local document information index to the identified image forming apparatus document server (10, 20, 30).

**17.** A method as claimed in claim 16, wherein the local document information index includes information for identification of a user associated with each document.

**18.** A method as claimed in claim 16 or 17, wherein the step of identifying the file server includes a step of polling each of said plurality of image forming apparatus document servers (10, 20, 30) to request whether any of said image forming apparatus document servers (10, 20, 30) is presently acting as the file server.

**19.** A method as claimed in claim 18, wherein if no image forming apparatus document server (10, 20, 30) declares itself as the file server, then the first image forming apparatus document server (10, 20, 30) to declare itself as the file server is identified by each of the image forming apparatus document server (10, 20, 30) as the file server.

**20.** A method as claimed in any one of claims 16 to 19, comprising receiving a request from a user for a document and issuing a request to the image forming apparatus document server (10, 20, 30) presently identified as a file server for information relating to the documents in the system associated with the user and supplying the document to the user based on the information received from the file server.

**21.** A method as claimed in any one of claims 16 to 19, comprising identifying a further image forming apparatus document server (10, 20, 30) as a backup file server, receiving a request from a user for a document, issuing a request to the backup file server for information relating to documents in the system associated with the user and supplying the document to the user based on the information received from the file server.

**22.** A method as claimed in any one of claims 16 to 21, further comprising receiving (300) at an image forming apparatus document server (10, 20, 30) presently identified as a file server a local document information index from at least one further image forming apparatus document server (10, 20, 30) and generating (310) a master index including information relating to the location of a plurality of documents located amongst the plurality of image forming apparatus document servers (10, 20, 30).

**23.** A method as claimed in claim 22, further comprising receiving (330) at the file server a request from one of said plurality of image forming apparatus document servers (10, 20, 30) for information relating to documents in the system associated with a user and supplying information (340) from the master index.

**24.** A method as claimed in claim 22, further comprising identifying a further one of the image forming apparatus document servers (10, 20, 30) as a backup file server and supplying the contents of the master index to said backup server.

**25.** A method as claimed in claim 24, comprising receiving at the backup file server a request from one of said plurality of image forming apparatus document servers (10, 20, 30) for information relating to documents in the system associated with a user and supplying information from the master index.

**26.** A method as claimed in any one of claims 16 to 25, including the step of receiving a request for a document at any one of said image forming apparatus document servers (10, 20, 30) and a step of authenticating the user.

**27.** An image forming apparatus document server (10) as claimed in claim 1, wherein said image forming apparatus document server (10) is arranged to further perform a file server role in which the image forming apparatus document server (10) is arranged to receive a local document information index from the at least one further image forming apparatus document server (20, 30) and to generate a master index comprising information relating to the location of a plurality of documents located amongst the plurality of image forming apparatus document servers (10, 20, 30).

**28.** An image forming apparatus document server (10) as claimed in claim 7, wherein said image forming apparatus document server (10) is arranged to further perform a client role in which the image forming apparatus document server (10) supplies its local document index to an image forming apparatus document server (20, 30) currently designated as a file server.
